# EUROPEAN PATENT SPECIFICATION

(11) **EP 3 748 315 B1**
(45) Date of publication and mention of the grant of the patent: **19.10.2022**
(21) Application number: 19179018.7
(22) Date of filing: 07.06.2019
(51) Int. Cl.: G01G 13/00

(54) **PRECISE MEASURING DEVICE FOR POWDER FEEDING**
PRÄZISIONSMESSVORRICHTUNG ZUR PULVERFÖRDERUNG
DISPOSITIF DE MESURE PRÉCIS POUR L'ACHEMINEMENT DE POUDRES

(43) Date of publication of application: 09.12.2020
(73) Proprietor: Logic Art Automation Co., LTD., New Taipei City (TW)
(72) Inventor: JUAN, Pang Chih, New Taipei City (TW)
(74) Representative: Viering, Jentschura & Partner mbB Patent- und Rechtsanwälte

(56) References cited:
- EP-A2- 0 295 035
- EP-A2- 3 244 174

## Description

### FIELD OF THE INVENTION

The present invention relates to a measuring control device, and more particularly to a precise measuring device.

### DESCRIPTION OF THE PRIOR ART

Conventional chemical industry, food industry, pharmaceutical industry, textile dyeing industry, etc., often use raw materials (such as liquid or powder). These raw materials are in accordance with the set proportions so as to achieve chemical reaction. In other words, the raw materials must be produce in batch in micro-precision measurement. Thus, how to quickly and correctly measure the raw materials is always a great concern to the industry.

An automatic material measuring and delivering device is disclosed in TW Patent No. M469265 and contains multiple storage apparatuses, an accommodation mechanism, a delivery apparatus, an electronic scale conveyor, an electronic scale lifting unit, and an electronic scale. The electronic scale is connected with the electronic scale conveyor via the electronic scale lifting unit so that the electronic scale is driven by the electronic scale lifting unit to lift or to descend. When the electronic scale lifts, the measurement platform extends to a material moving space. When the electronic scale descends, the measurement platform descends to the material moving space. When the electronic scale measure a weight of the material, the electronic scale lifting unit lifts the electronic scale and the accommodation mechanism to remove from the delivery apparatus, hence the accommodation mechanism is supported by the measurement platform, thus weighing the material.

However, the automatic material measuring and delivering device has defects as follows:
Each of the multiple storage apparatuses has a storage space and an outlet. Since the storage space or the outlet does not has a precise measuring structure, the material is fed to the accommodation mechanism via the outlet. Therefore, the material is measured in a large quantity but cannot be measured accurately.

A modular measuring system is disclosed in TW 1607202 and is configured to mix various materials in a same system, thus measuring materials in different types and quantities.

The present invention has arisen to mitigate and/or obviate the afore-described disadvantages.

EP 0 295 035 A2 and EP 3 244 174 A2 disclose some further known designs.

### SUMMARY OF THE INVENTION

According to the present invention, a precise measuring device for powders feeding is provided as specified in claim 1.

The dependent claims show some examples thereof. The primary aspect of the present invention is to provide a precise measuring device for powders feeding which measures powders accurately.

To obtain the above aspects, a precise measuring device provided by the present invention contains: a material storage unit configured to accommodate powders, the material storage unit including a supply pipe unit arranged on a bottom of the material storage unit, and the supply pipe unit having a first side communicating with the material storage unit so as to receive the powders dropping from the material storage unit, and the supply pipe unit having an outlet defined on a second side of the supply pipe unit;
a material feeder connected with a third side of the supply pipe unit and configured to deliver the powders to the outlet from the supply pipe unit;
a plug configured to movably abut against or remove from the outlet;
a powder control device movably connected with the plug and configured to movably control the plug to abut against or to remove from the outlet; and
a measuring unit located below the outlet, and the measuring unit is configured to accommodate the powders dropping from the outlet of the supply pipe unit.

Thereby, a controlling apparatus (not shown), such as any one of a programmable logic (PLC) controller, a microcomputer, a computer, and a control circuit device (not shown) which is electrically connected with the material storage unit, the material feeder, the powder control device, and the measuring unit, wherein the powders drop to the supply pipe unit from the material storage unit. The controlling apparatus is the PLC controller configured to determine a set weight control parameter for driving the material feeder to deliver the powders toward a side of the outlet from the supply pipe unit, and the PLC controller instructs the powder control device to drive the plug to remove from the outlet based on a dropping control parameter at a predetermined distance, a size of a gap, or an opening width between the plug and the outlet, wherein the predetermined distance or the opening width matches with the set weight control parameter and is calculated by the PLC controller. Preferably, a dropping speed of the powders or a dropping weight of the powders matching with the set weight control parameter is calculated by the PLC controller. In addition, a combination of the dropping speed and the dropping weight of the powders matching with the set weight control parameter is calculated by the PLC controller. When the dropping speed is quick or the dropping weight is heavy, the opening width increases so as to drop the powders in a large quantity. When the dropping speed is slow or the dropping weight is light, the opening width decreases so as to drop the powders in a small quantity. When the dropping weight of the powders is close to a predetermined supply weight, the size of the gap or the opening width between the plug and the outlet is decreased so as to control the dropping weight of the powders accurately. The opening width between the plug and the outlet matches with the dropping weight of the powders in the measuring unit, and the weight data is sent to the PLC controller so that the PLC controller sends an adjustment instruction at any time. When the dropping weight of the powders in the measuring unit reaches the predetermined supply weight, the PLC controller reads a weight signal of measuring the dropping weight of the powders in the measuring unit, and the PLC controller instructs the powder control device to drive the plug to close the outlet, thus stopping dropping the powders from the material storage unit and supplying the powders at the predetermined supply weight.

The material feeder includes a vibration device connected with a bottom of the supply pipe unit so as to vibrate the powders in the supply pipe unit to move toward the outlet, wherein the vibration device is a vibrator. The vibration device contacts with the supply pipe unit.

The vibration device is electrically connected with the PLC controller so that the PLC controller controls a vibration frequency of the vibration device based on the set weight control parameter. The PLC controller controls the driving unit to drive the drive rod to rotatably deliver the powders from the material storage unit to the supply pipe unit. The driving unit is coupled with the drive rod so as to drive the drive rod to rotatably deliver the powders to the outlet of the supply pipe unit, and the vibration device vibrates the supply pipe unit to deliver the powders toward the outlet of the supply pipe unit so that the powders drop into the measuring unit from the outlet, thus controlling the powders (such as the powders in a minute quantity) at the predetermined supply weight accurately.

The precise measuring device distinguishes whether the dropping weight of the powders reaches the predetermined supply weight at a high precision.

### BRIEF DESCRIPTION OF THE DRAWINGS

FIG. 1 is a cross sectional view showing the assembly of a precise measuring device for powders feeding according to a preferred embodiment of the present invention.
FIG. 2 is a perspective view showing the exploded components of a part of the precise measuring device for powders feeding according to the preferred embodiment of the present invention.
FIG. 3 is another cross sectional view showing the assembly of the precise measuring device for powders feeding according to the preferred embodiment of the present invention.

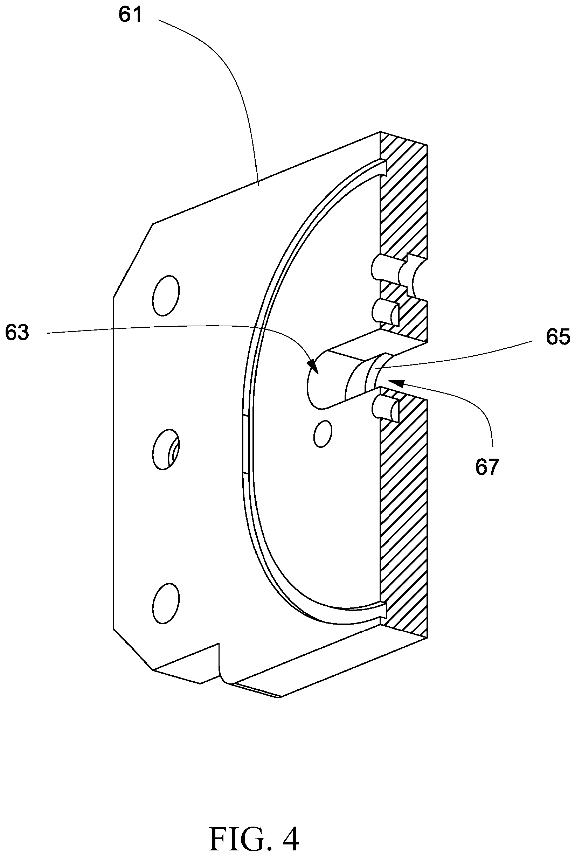

FIG. 4 is a cross-sectional perspective view showing the assembly of a part of the precise measuring device for powders feeding according to the preferred embodiment of the present invention.
FIG. 5 is a perspective view showing the exploded components of a part of the precise measuring device for powders feeding according to the preferred embodiment of the present invention.
FIG. 6 is a perspective view showing the assembly of a part of the precise measuring device for powders feeding according to the preferred embodiment of the present invention.
FIG. 7 is a cross sectional view showing the assembly of a precise measuring device for powders feeding according to another preferred embodiment of the present invention.
FIG. 8 is another cross sectional view showing the assembly of the precise measuring device for powders feeding according to another preferred embodiment of the present invention.

### DETAILED DESCRIPTION OF THE PREFERRED

### EMBODIMENTS

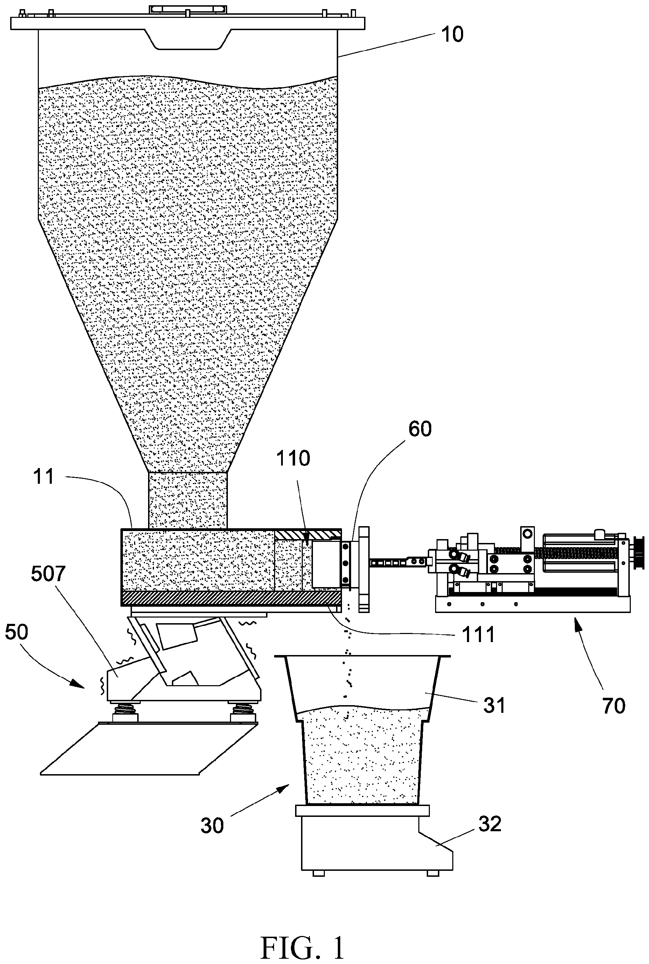

With reference to FIGS. 1-3, a precise measuring device for powders feeding according to a preferred embodiment of the present invention comprises:
a material storage unit 10 configured to accommodate powders, the material storage unit 10 including a supply pipe unit 11 arranged on a bottom of the material storage unit 10, and the supply pipe unit 11 has a first side communicating with the material storage unit 10 so as to receive powders dropping from the material storage unit 10, and the supply pipe unit 11 has an outlet 110 defined on a second side of the supply pipe unit 110;
a material feeder 50 connected with a third side of the supply pipe unit 11 and configured to deliver the powders to the outlet 110 from the supply pipe unit 11;
a plug 60 configured to movably abut against or remove from the outlet 110;
a powder control device 70 movably connected with the plug 60 and configured to movably control the plug 60 to abut against or to remove from the outlet 110; and
a measuring unit 30 located below the outlet 110 and configured to accommodate the powders from the outlet 110 via the supply pipe unit 11.

Thereby, a controlling apparatus (not shown), such as any one of a programmable logic (PLC) controller, a microcomputer, a computer, and a control circuit device (not shown) which is electrically connected with the material storage unit 10, the material feeder 50, the powder control device 70, and the measuring unit 30, wherein the powders drop to the supply pipe unit 11 from the material storage unit 10. The controlling apparatus is the PLC controller configured to determine a set weight control parameter for driving the material feeder 50 to deliver the powders toward a side of the outlet 110 from the supply pipe unit 11, and the PLC controller instructs the powder control device 70 to drive the plug 60 to remove from the outlet 110 based on a dropping control parameter at a predetermined distance, a size of a gap, or an opening width between the plug 60 and the outlet 110, wherein the predetermined distance or the opening width matches with the set weight control parameter and is calculated by the PLC controller. Preferably, a dropping speed of the powders or a dropping weight of the powders matching with the set weight control parameter is calculated by the PLC controller. In addition, a combination of the dropping speed and the dropping weight of the powders matching with the set weight control parameter is calculated by the PLC controller. When the dropping speed is quick or the dropping weight is heavy, the opening width increases so as to drop the powders in a large quantity. When the dropping speed is slow or the dropping weight is light, the opening width decreases so as to drop the powders in a small quantity. When the dropping weight of the powders is close to a predetermined supply weight, the size of the gap or the opening width between the plug 60 and the outlet 110 is decreased so as to control the dropping weight of the powders accurately. The opening width between the plug 60 and the outlet 110 matches with the dropping weight of the powders in the measuring unit 30, and the weight data is sent to the PLC controller so that the PLC controller sends an adjustment instruction at any time. When the dropping weight of the powders in the measuring unit 30 reaches the predetermined supply weight, the PLC controller reads a weight signal of measuring the dropping weight of the powders in the measuring unit 30, and the PLC controller instructs the powder control device 70 to drive the plug 60 to close the outlet 110, thus stopping dropping the powders from the material storage unit 10 and supplying the powders at the predetermined supply weight.

The precise measuring device further comprises the controlling apparatus (not shown), such as any one of the programmable logic (PLC) controller, the microcomputer, the computer, and the control circuit device which are electrically connected with the material storage unit 10, the material feeder 50, the powder control device 70, and the measuring unit 30, wherein the powders drop to the supply pipe unit 11 from the material storage unit 10. In another embodiment, the controlling apparatus is the PLC controller having multiple preset control parameters so that user inputs a predetermined supply weight (quantity) to the controlling apparatus so as to instruct the material storage unit 10, the material feeder 50, the powder control device 70, and the measuring unit 30 to operate, thus supplying the powders at the predetermined supply weight.

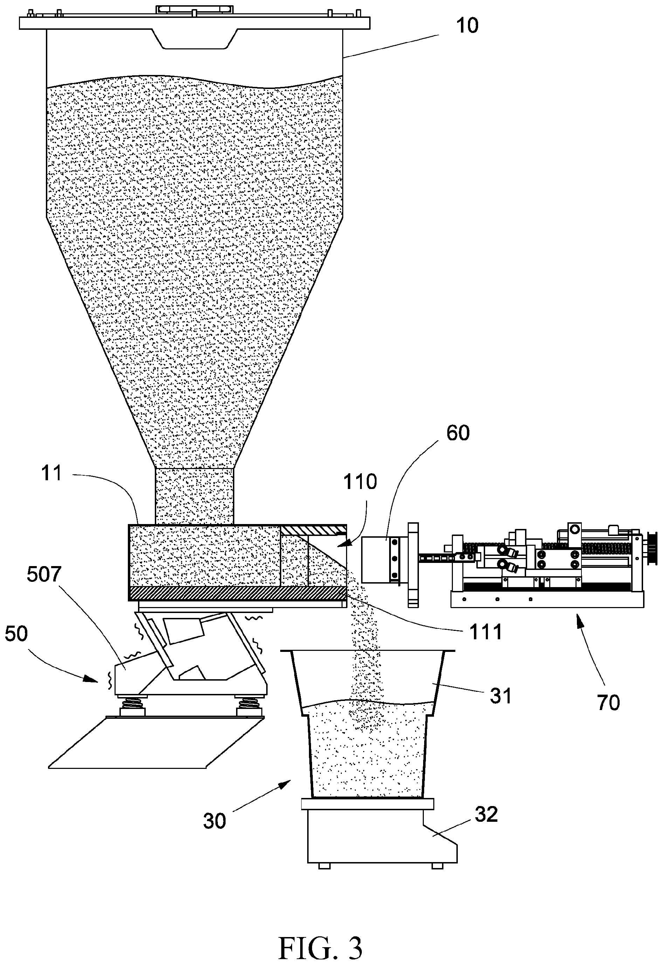

Referring to FIGS. 1 and 3, the measuring unit 30 includes a container 31 and a weighting scale 32 on which the container 31 is placed, wherein the container 31 is configured to accommodate the powders dropping from the outlet 110, and the weighting scale 32 is configured to measure a weight of the powders in the container 31 precisely. The weighting scale 32 is an electronic balance or an electronic scale. The material feeder 50 includes a vibration device 507 connected with a bottom of the supply pipe unit 11 so as to vibrate the powders in the supply pipe unit 11 to move toward the outlet 110, wherein the vibration device 507 is a vibrator.

As shown in FIGS. 1-3, a driver 77 is configured to drive a mover 75 to move a power apparatus 73 and a connector 71 forward and backward, and the connector 71 is driven by the power apparatus 73 to move to the plug 60, wherein the connector 71 is movably connected with the plug 60 or removed from the plug 60.

The plug 60 abuts against the outlet 110. For example, a predetermined drive parameter of the PLC controller (not shown) instructs the driver 77 to drive the mover 75 to move the power apparatus 73 and the connector 71, and the connector 71 movably connects with the plug 60. Preferably, the driver 77 drives the mover 75 to move the power apparatus 73 and the connector 71 so that the plug 60 is driven by the power apparatus 73 and the connector 71 to remove from outlet 110 at a predetermined opening width, such that the powders drop from the outlet 110, wherein the opening width between the plug 60 and the outlet 110 matches with a change value of the dropping weight of the powders in the measuring unit 30 to feedback weight data to the PLC controller so that the PLC controller sends the adjustment instruction to adjust the opening width (in a minimum value). When the dropping weight of the powders in the measuring unit 30 reaches the predetermined supply weight, the PLC controller reads the weight signal of measuring the dropping weight of the powders in the measuring unit 30, and the PLC controller instructs the powder control device 70 to drive the plug 60 to abut against the outlet 110, thus stopping dropping the powders from the material storage unit 10 and dropping the powders to the measuring unit 30. Thereafter, the PLC controller instructs the mover 75 to move the power apparatus 73 and the connector 71 and to actuate the plug 60 to move toward the outlet 110, thus abutting the outlet 110. Thereafter, the PLC controller instructs the connector 71 to remove from the plug 60, and the mover 75 is instructed by the PLC controller to move the power apparatus 73 and the connector 71 away from the plug 60.

As illustrated in FIGS. 1-3, the connector 71 is a fixture, the power apparatus 73 is a cylinder, the mover 75 is a screw rod, and the driver 77 is a motor. The fixture has a connection portion 710 and a jaw portion 711 opposite to the connection portion 710, wherein the connection portion 710 is connected with a first end of the cylinder, a first end of the screw rod is movably connected with a second side of the cylinder, and the motor drives a second end of the screw rod. The connection portion 710 and the jaw portion 711 are driven by the cylinder to moveably expand or retract, such that the fixture is movably connected with or removed from the plug 60.

Furthermore, the motor is any one of a stepper motor, a servo motor, and a DC motor. The motor is connected with the screw rod by ways of a belt or a chain, and the plug 60 abuts against the outlet 110. In this embodiment, the motor is a stepped motor so that the PLC controller instructs the stepped motor to drive the screw rod, and the screw rod moves the cylinder and the fixture toward the plug 60, wherein the fixture clamps the plug 60. Preferably, the stepped motor drives the screw rod to move the cylinder and the fixture to actuate the plug 60 so that the plug 60 removes from the outlet 110 at the predetermined opening width, thus dropping the powders. The opening width between the plug 60 and the outlet 110 matches with the change value of the dropping weight of the powders in the measuring unit 30 to feedback the weight data to the PLC controller so that the PLC controller sends the adjustment instruction to adjust the opening width (in the minimum value). When the dropping weight of the powders in the measuring unit 30 reaches the predetermined supply weight, the PLC controller reads the weight signal of measuring the dropping weight of the powders in the measuring unit 30, and the PLC controller instructs the stepped motor to drive the screw rod to move the cylinder and the fixture so that the plug 60 is actuated by the cylinder and the fixture to abut against the outlet 110. Preferably, the PLC controller instructs the fixture to detach from the plug 60, and the screw rod moves the cylinder and the fixture to move away from the plug 60.

With reference to FGS. 1-4, the plug 60 includes a plate 61 connected with a first surface of the plug 60, and the plate 61 has an aperture 63 and two engagement portions 65 formed on two sides of the aperture 63 respectively; wherein the two engagement portions 65 are arcuate and extend around two sides of the aperture 63 respectively, and a locking space 67 is defined between the two engagement portion 65 so that the jaw portion 711 retains with the two engagement portions 65 of the aperture 63 by using the locking space 67.

When the jaw portion 711 of the fixture retains with the aperture 63, the cylinder drives the connection portion 710 and the jaw portion 711 to expand so that the jaw portion 711 expands to engage with the two engagement portions 65 in the locking space 67. In contrast, the cylinder drives the connection portion 710 and the jaw portion 711 to retract so that the jaw portion 711 removes from the two engagement portions 65 in the locking space 67.

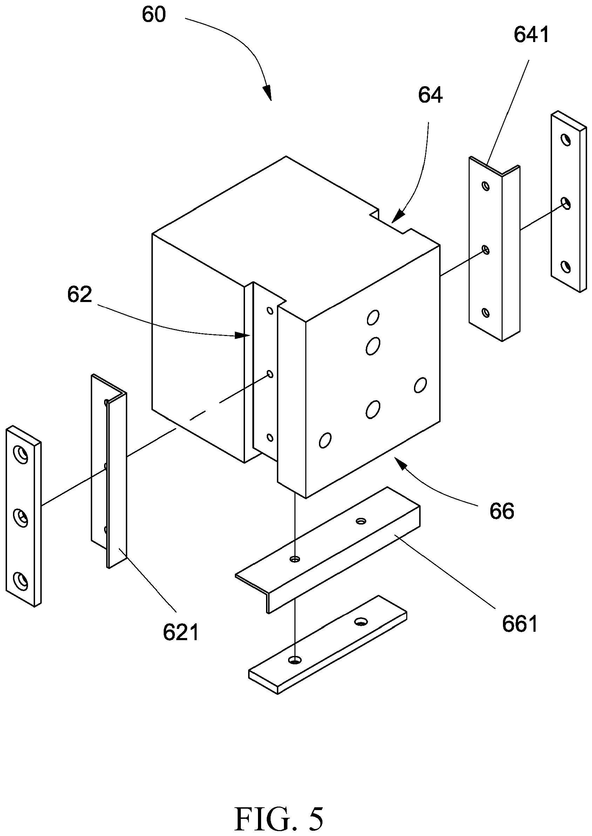

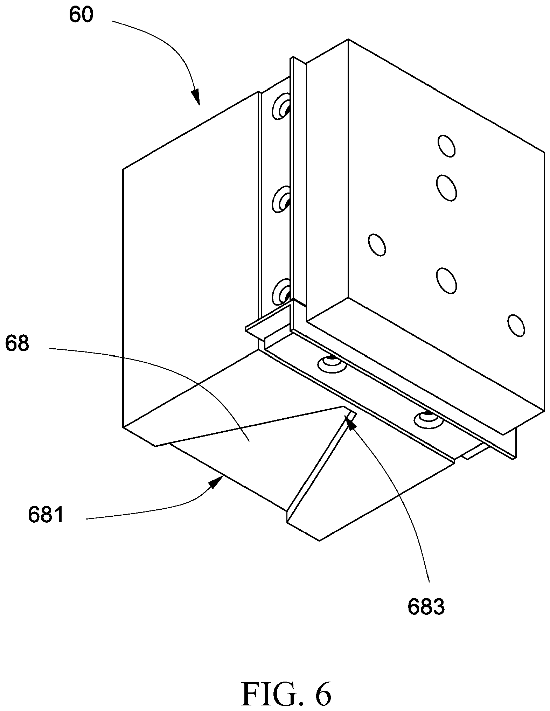

Referring to FIGS. 5 and 6, the plug 60 has a first slot 62 defined on a first side thereof, a second slot 64 defined on a second side of the plug 60 opposite to the first side of the plug 60, and a third slot 66 formed on a second surface of the plug 60, wherein the first slot 62 is connected with a first scrape sheet 621, the second slot 64 is coupled with a second scrape sheet 641, and the third slot 66 is coupled with a third scrape sheet 661, such that the plug 60 abuts against the outlet 110, and the scrape sheet 621, the second scrape sheet 641, and the third scrape sheet 661 scrape a part of the powders between the plug 60 and the outlet 110, thus controlling the powders at the predetermined supply weight of the PLC controller.

The plug or the first, second, and third scrape sheets are made of any one of rubber, plastic, silicone, metal, and fiber.

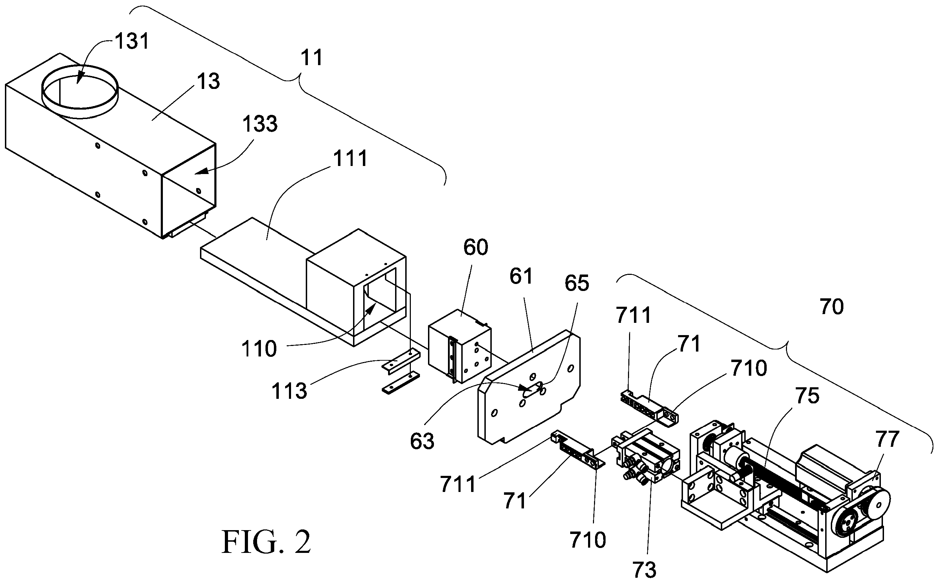

As shown in FIG. 2, a top of the outlet 110 is coupled with a fourth scrape sheet 113 so as to scrape remains of the powders in the outlet 110 to drop into the measuring unit 30 by using the material feeder 50.

As illustrated in FIGS. 1 and 6, the plug 60 has a conical orifice 68 defined on the second surface thereof, wherein the conical orifice 68 has a first open end 681 defined on a first side thereof, and the conical orifice 68 has a second open end 683 defined on a second side thereof, wherein a width of the conical orifice 68 decreases from the first open end 681 to the second open end 683 so as to adjust the opening width between the plug 60 and the outlet 110, when the plug 60 removes from the outlet 110. The plug 60 contacts with a few of the powders by ways of the first open end 681 of the conical orifice 60, and the few powders drop into the measuring unit 30 via the second open end 683, thus controlling the powders at the predetermined supply weight accurately.

As illustrated in FIGS. 1-3, the supply pipe unit 11 has a counterweight 111 and a pipe 13, the outlet 110 is formed on a side of the counterweight 111, and the pipe 13 has a receiving orifice 131 defined on a first side thereof and an opening 133 defined on a second side of the pipe 13, wherein the receiving orifice 131 is configured to communicate with the material storage unit 10, the counterweight 111 is arranged on a bottom of an interior of the pipe 13, and the outlet 110 is connected with the opening 133, wherein the powders in the supply pipe unit 11 is placed on the counterweight 111.

The material feeder 50 includes the vibration device 507 (such as the vibrator) connected with a bottom of the supply pipe unit 11 so as to vibrate the powders in the supply pipe unit 11 to move toward the outlet 110 by mating with the counterweight 111 in high vibration efficiency, thus moving the powders toward the outlet 111 quickly.

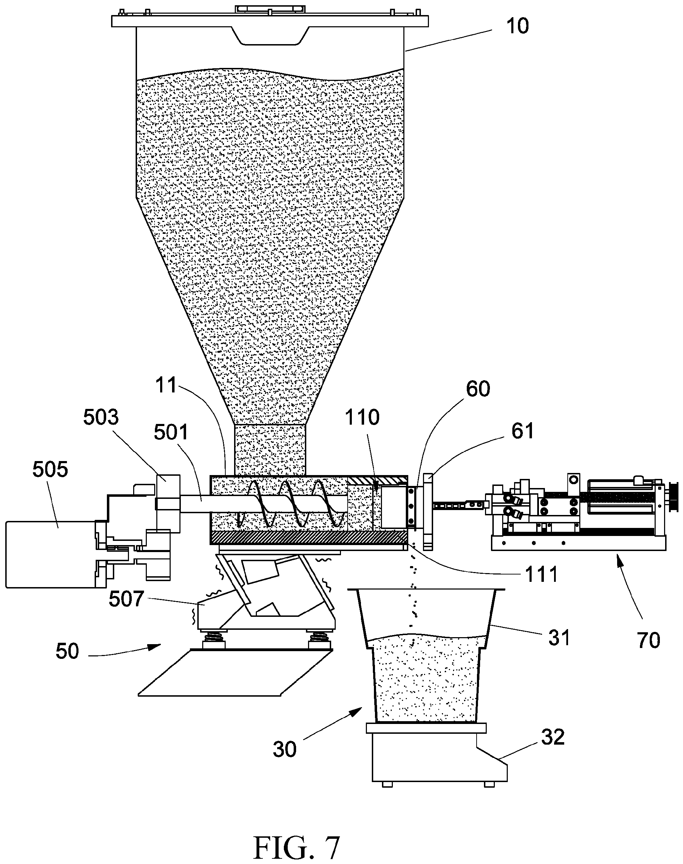

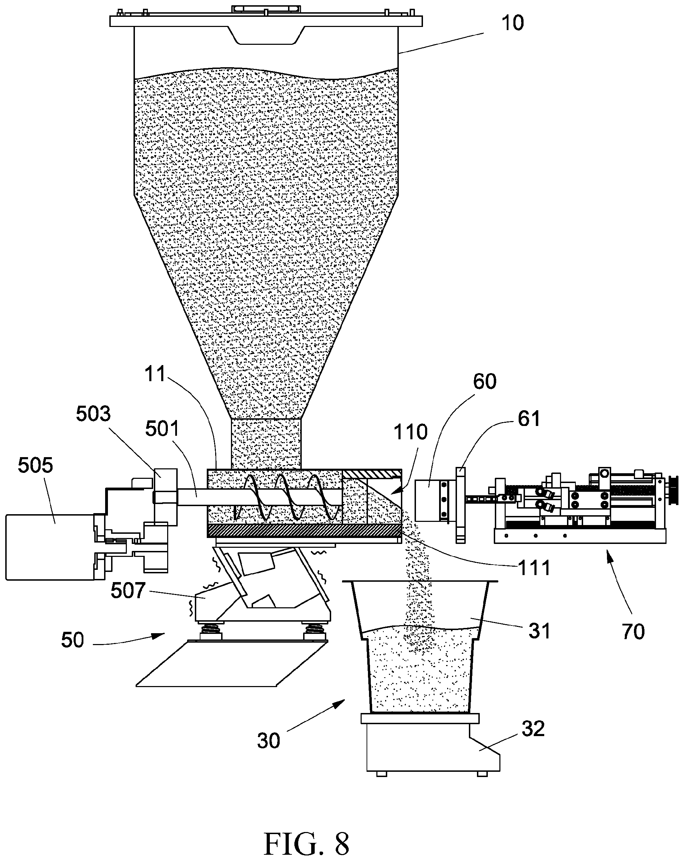

With reference to FIGS. 2, 7, and 8, the material feeder 50 includes a drive rod 501, a coupler 503, and a driving unit 505. The supply pipe unit 11 is inserted through the drive rod 501, a side of the drive rod 501 is joined with the coupler 503, and the coupler 503 is coupled with the driving unit 505 electrically connected with the PLC controller (not shown), wherein the material feeder 50 further includes the vibration device 507 (such as the vibrator) connected with the bottom of the supply pipe unit 11, and the vibration device 507 is electrically connected with the PLC controller so that the PLC controller controls a vibration frequency of the vibration device 507 based on the set weight control parameter. The PLC controller controls the driving unit 505 to drive the drive rod 501 to rotatably deliver the powders from the material storage unit 10 to the supply pipe unit 11. The driving unit 505 (such as a stepped driver) is coupled with the drive rod 501 so as to drive the drive rod 501 to rotatably deliver the powders to the outlet 110 of the supply pipe unit 11, and the vibration device 507 vibrates the supply pipe unit 11 to deliver the powders toward the outlet 110 of the supply pipe unit 11 so that the powders drop into the measuring unit 30 from the outlet 110, thus controlling the powders (such as the powders in a minute quantity) at the predetermined supply weight accurately.

The PLC controller accurately controls the powders to drop into the container 31 in the minute quantity by using the vibration device, and a weighting value of the weighting scale 32 is sent to the PLC controller so that a close loop of software calculates a supply weight of the powders accurately.

When the supply weight of the powders does not reach a weighting accuracy, an alarm device makes an alert so that an operator presets the set weight control parameter.

The precise measuring device distinguishes whether the dropping weight of the powders reaches the predetermined supply weight at a high precision, such as ±0.02 g.

Referring to FIG. 2, the powders have high viscosity and poor fluidity. The PLC controller has a software algorithm to adjust the vibration frequency or/and vibrating time of the vibration device 507, thus obtaining an accurate dropping weight of the powders.

While the preferred embodiments of the invention have been set forth for the purpose of disclosure, modifications of the disclosed embodiments of the invention as well as other embodiments thereof may occur to those skilled in the art. The scope of the claims should not be limited by the preferred embodiments set forth in the examples, but should be given the broadest interpretation consistent with the description as a whole.

## Claims

1. A precise measuring device for powders feeding comprising:
a material storage unit (10) configured to accommodate powders, the material storage unit (10) including a supply pipe unit (11) arranged on a bottom of the material storage unit (10), and the supply pipe unit (11) having a first side communicating with the material storage unit (10) so as to receive the powders dropping from the material storage unit (10), and the supply pipe unit (11) having an outlet (110) defined on a second side of the supply pipe unit (11);
a material feeder (50) connected with a third side of the supply pipe unit (11) and configured to deliver the powders to the outlet (110) from the supply pipe unit (11); and
a measuring unit (30) including a container (31) and a weighting scale (32) on which the container (31) is placed, whereby the measuring unit (30) is located below the outlet (110), and the container (31) is configured to accommodate the powders dropping from the outlet (110) of the supply pipe unit (11),
**characterized by**
a plug (60) configured to movably abut against or remove from the outlet (110);
a powder control device (70) movably connected with the plug (60) and configured to movably control the plug (60) to abut against or to remove from the outlet (110).

2. The precise measuring device as claimed in claim 1 further comprising a controlling apparatus which is electrically connected with the material storage unit (10), the material feeder (50), the powder control device (70), and the measuring unit (30).

3. The precise measuring device as claimed in claim 1 or 2, **characterized in that** the powder control device (70) further includes a connector (71), a power apparatus (73), a mover (75), and a driver (77), wherein the connector (71) is movably connected with the plug (60), a first end of the screw rod (75) is movably connected with a second side of the cylinder (73), and a second end of the screw rod (75) is connected with the driver (77).

4. The precise measuring device as claimed in claim 3, **characterized in that** the connector (71) is a fixture, the power apparatus (73) is a cylinder, the mover (75) is a screw rod, and the driver (77) is a motor; the fixture has a connection portion (710) and a jaw portion (711) opposite to the connection portion (710), wherein the connection portion (710) is connected with a first end of the cylinder, a first end of the screw rod is movably connected with a second side of the cylinder, and the motor drives a second end of the screw rod; the connection portion (710) and the jaw portion (711) of the fixture are driven by the cylinder to moveably expand or retract, such that the fixture is movably connected with or removed from the plug (60).

5. The precise measuring device as claimed in claim 4, **characterized in that** the plug (60) includes a plate (61) connected with a first surface of the plug (60), and the plate 61 has an aperture (63) and two engagement portions (65) formed on two sides of the aperture (63) respectively; wherein the two engagement portions (65) are arcuate and extend around two sides of the aperture (63) respectively, and a locking space (67) is defined between the two engagement portion (65).

6. The precise measuring device as claimed in claim 1 or 2, **characterized in that** the weighting scale (32) is an electronic balance or an electronic scale.

7. The precise measuring device as claimed in claim 1 or 2, **characterized in that** the plug (60) has a first slot (62) defined on a first side thereof, a second slot (64) defined on a second side of the plug (60) opposite to the first side of the plug (60), and a third slot (66) formed on a second surface of the plug (60), wherein the first slot (62) is connected with a first scrape sheet (621), the second slot (64) is coupled with a second scrape sheet (641), and the third slot (66) is coupled with a third scrape sheet (661).

8. The precise measuring device as claimed in claim 1 or 2, **characterized in that** a top of the outlet (110) is coupled with a fourth scrape sheet (113).

9. The precise measuring device as claimed in claim 1 or 2, **characterized in that** the plug (60) has a conical orifice (68) defined on the second surface thereof, wherein the conical orifice (68) has a first open end (681) defined on a first side thereof, and the conical orifice (68) has a second open end (683) defined on a second side thereof, wherein a width of the conical orifice (68) decreases from the first open end (681) to the second open end (683).

10. The precise measuring device as claimed in claim 1 or 2, **characterized in that** the supply pipe unit (11) has a counterweight (111) and a pipe (13), the outlet (110) is formed on a side of the counterweight (111), and the pipe (13) has a receiving orifice (131) defined on a first side thereof and an opening (133) defined on a second side of the pipe (13), wherein the receiving orifice (131) is configured to communicate with the material storage unit (10), the counterweight (111) is arranged on a bottom of an interior of the pipe (13), and the outlet (110) is connected with the opening (133).

11. The precise measuring device as claimed in claim 10, **characterized in that** the material feeder (50) includes a vibration device (507) connected with a bottom of the supply pipe unit (11).

## Patentansprüche

1. Eine präzise Messvorrichtung zum Pulverfördern, welche aufweist:
eine Material-Speicher-Einheit (10), welche konfiguriert ist, um Pulver aufzunehmen, wobei die Material-Speicher-Einheit (10) eine Zufuhr-Leitung-Einheit (11) aufweist, welche an einem Boden der Material-Speicher-Einheit (10) angeordnet ist, und wobei die Zufuhr-Leitung-Einheit (11) eine erste Seite hat, welche mit der Material-Speicher-Einheit (10) kommuniziert, um das Pulver entgegenzunehmen, welches von der Material-Speicher-Einheit (10) herunterfällt, und wobei die Zufuhr-Leitung-Einheit (11) einen Auslass (110) hat, welcher an einer zweiten Seite der Zufuhr-Leitung-Einheit (11) definiert ist;
ein Material-Einspeiser (50), welcher mit einer dritten Seite der Zufuhr-Leitung-Einheit (11) verbunden ist und konfiguriert ist, um das Pulver von der Zufuhr-Leitung-Einheit (11) zum Auslass (110) zuzuführen; und
eine Messeinheit (30), welche einen Container (31) und eine Waage (32), auf welcher der Container (31) platziert ist, aufweist,
wodurch die Messeinheit (30) unter dem Auslass (110) positioniert ist, und der Container (31) konfiguriert ist, um das Pulver aufzunehmen, welches vom Auslass (110) der Zufuhr-Leitung-Einheit (11) herunterfällt,
**gekennzeichnet durch**
einen Stopfen (60), welcher konfiguriert ist, um bewegbar am Auslass (110) anzuliegen oder sich vom Auslass (110) zu entfernen;
eine Pulver-Steuerung-Vorrichtung (70), welche bewegbar mit dem Stopfen (60) verbunden ist und konfiguriert ist, um den Stopfen (60) bewegbar zu steuern, um am Auslass (110) anzuliegen oder vom Auslass (110) entfernt zu werden.

2. Die präzise Messvorrichtung nach Anspruch 1, welche ferner eine Steuerungsvorrichtung aufweist, welche elektrisch mit der Material-Speicher-Einheit (10), dem Material-Einspeiser (50), der Pulver-Steuerung-Vorrichtung (70), und der Messeinheit (30) verbunden ist.

3. Die präzise Messvorrichtung nach Anspruch 1 oder 2, **dadurch gekennzeichnet, dass** die Pulver-Steuerung-Vorrichtung (70) ferner einen Verbinder (71), eine Leistungsvorrichtung (73), eine Bewegungsvorrichtung (75), und eine Antriebsvorrichtung (77) aufweist, wobei der Verbinder (71) bewegbar mit dem Stopfen (60) verbunden ist, ein erstes Ende des Schraube-Stabs (75) bewegbar mit einer zweiten Seite des Zylinders (73) verbunden ist, und ein zweites Ende des Schraube-Stabs (75) mit der Antriebsvorrichtung (77) verbunden ist.

4. Die präzise Messvorrichtung nach Anspruch 3, **dadurch gekennzeichnet, dass** der Verbinder (71) eine Befestigung ist, die Leistungsvorrichtung (73) ein Zylinder ist, die Bewegungsvorrichtung (75) ein Schraube-Stab ist, und die Antriebsvorrichtung (77) ein Motor ist; wobei die Befestigung einen Verbindungsabschnitt (710) und einen Backenabschnitt (711) entgegengesetzt zum Verbindungsabschnitts (710) hat, wobei der Verbindungsabschnitt (710) mit einem ersten Ende des Zylinders verbunden ist, ein erstes Ende des Schraube-Stabs bewegbar mit einer zweiten Seites des Zylinders verbunden ist, und der Motor ein zweites Ende des Schraube-Stabs antreibt; wobei der Verbindungsabschnitt (710) und der Backenabschnitt (711) der Befestigung mittels des Zylinders angetrieben werden, um sich bewegbar auszudehnen oder zurückzuziehen, sodass die Befestigung bewegbar mit dem Stopfen (60) verbunden ist/wird oder vom Stopfen (60) entfernt ist/wird.

5. Die präzise Messvorrichtung nach Anspruch 4, **dadurch gekennzeichnet, dass** der Stopfen (60) eine Platte (61) aufweist, welche mit einer ersten Fläche des Stopfens (60) verbunden ist, und die Platte (61) eine Apertur (63) und zwei Eingriffsabschnitte (65) hat, welche entsprechend zugeordnet an zwei Seiten der Apertur (63) gebildet sind; wobei die zwei Eingriffsabschnitte (65) jeweils bogenförmig sind und sich um zwei Seiten der Apertur (63) ausdehnen, und ein Verriegelungsraum (67) zwischen den zwei Eingriffsabschnitten (65) definiert ist.

6. Die präzise Messvorrichtung nach Anspruch 1 oder 2, **dadurch gekennzeichnet, dass** die Waage (32) eine elektronische Balkenwaage oder eine elektronische Federwaage ist.

7. Die präzise Messvorrichtung nach Anspruch 1 oder 2, **dadurch gekennzeichnet, dass** der Stopfen (60) eine erste Nut (62), welche auf einer ersten Seite davon definiert ist, eine zweite Nut (64), welche auf einer zweiten Seite des Stopfens (60) entgegengesetzt zur ersten Seite des Stopfens (60) definiert ist, und eine dritte Nut (66), welche auf einer zweiten Fläche des Stopfens (60) gebildet ist, hat, wobei die erste Nut (62) mit einem ersten Kratzblech (621) verbunden ist, die zweite Nut (64) mit einem zweiten Kratzblech (641) gekoppelt ist, und die dritte Nut (66) mit einem dritten Kratzblech (661) gekoppelt ist.

8. Die präzise Messvorrichtung nach Anspruch 1 oder 2, **dadurch gekennzeichnet, dass** eine Oberseite des Auslasses (110) mit einem vierten Kratzblech (113) gekoppelt ist.

9. Die präzise Messvorrichtung nach Anspruch 1 oder 2, **dadurch gekennzeichnet, dass** der Stopfen (60) eine konische Verengung (68) hat, welche auf der zweiten Fläche davon definiert ist, wobei die konische Verengung (68) ein erstes offenes Ende (681) hat, welches an der ersten Seite davon definiert ist, und die konische Verengung (68) ein zweites offenes Ende (683) hat, welches an einer zweiten Seite davon definiert ist, wobei eine Breite der konischen Verengung (68) vom ersten offenen Ende (681) zum zweiten offenen Ende (683) abnimmt.

10. Die präzise Messvorrichtung nach Anspruch 1 oder 2, **dadurch gekennzeichnet, dass** die Zufuhr-Leitung-Einheit (11) ein Gegengewicht (111) und eine Leitung (13) hat, wobei der Auslass (110) an einer Seite des Gegengewichts (111) gebildet ist, und die Leitung (13) eine Aufnahmeöffnung (131) hat, welche an einer ersten Seite davon definiert ist, und eine Öffnung (133), welche an einer zweiten Seite der Leitung (13) definiert ist, wobei die Aufnahmeöffnung (131) konfiguriert ist, um mit der Material-Speicher-Einheit (10) zu kommunizieren, wobei das Gegengewicht (111) auf einem Boden eines Inneren der Leitung (13) angeordnet ist, und der Auslass (110) mit der Öffnung (133) verbunden ist.

11. Die präzise Messvorrichtung nach Anspruch 10, **dadurch gekennzeichnet, dass** der Material-Einspeiser (50) eine Schwingungsvorrichtung (507) aufweist, welche mit einer Unterseite der Zufuhr-Leitung-Einheit (11) verbunden ist.

## Revendications

1. Dispositif de mesure de précision pour l'alimentation en poudres, comprenant :
une unité de stockage de matériau (10) configurée pour recevoir des poudres, l'unité de stockage de matériau (10) comprenant une unité de tuyau d'alimentation (11) disposée sur un fond de l'unité de stockage de matériau (10), et l'unité de tuyau d'alimentation (11) ayant un premier côté communiquant avec l'unité de stockage de matériau (10) de manière à recevoir les poudres tombant de l'unité de stockage de matériau (10), et l'unité de tuyau d'alimentation (11) ayant une sortie (110) définie sur un second côté de l'unité de tuyau d'alimentation (11) ;
un dispositif d'alimentation en matériau (50) connecté à un troisième côté de l'unité de tuyau d'alimentation (11) et configuré pour délivrer les poudres à la sortie (110) depuis l'unité de tuyau d'alimentation (11) ; et
une unité de mesure (30) comprenant un récipient (31) et une échelle de pesage (32) sur laquelle le récipient (31) est placé, moyennant quoi l'unité de mesure (30) est située sous la sortie (110), et le récipient (31) est configuré pour recevoir les poudres tombant de la sortie (110) de l'unité de tuyau d'alimentation (11),
**caractérisé par**
un bouchon (60) configuré pour venir en butée de manière mobile contre la sortie (110) ou pour être retiré de celle-ci ;
un dispositif de commande de poudre (70) connecté de manière mobile au bouchon (60) et configuré pour commander de manière mobile le bouchon (60) pour qu'il vienne en butée contre la sortie (110) ou qu'il soit retiré de celle-ci.

2. Dispositif de mesure de précision selon la revendication 1, comprenant en outre un appareil de commande qui est connecté électriquement à l'unité de stockage de matériau (10), au dispositif d'alimentation en matériau (50), au dispositif de commande de poudre (70) et à l'unité de mesure (30).

3. Dispositif de mesure de précision selon la revendication 1 ou 2, **caractérisé en ce que** le dispositif de commande de poudre (70) comprend en outre un connecteur (71), un appareil de puissance (73), un dispositif de déplacement (75) et un dispositif d'entraînement (77), dans lequel le connecteur (71) est connecté de manière mobile au bouchon (60), une première extrémité de la tige filetée (75) est connectée de manière mobile à un second côté du cylindre (73), et une seconde extrémité de la tige filetée (75) est connectée au dispositif d'entraînement (77).

4. Dispositif de mesure de précision selon la revendication 3, **caractérisé en ce que** le connecteur (71) est une fixation, l'appareil de puissance (73) est un cylindre, le dispositif de déplacement (75) est une tige filetée, et le dispositif d'entraînement (77) est un moteur ; la fixation a une partie de connexion (710) et une partie de mâchoire (711) opposée à la partie de connexion (710), où la partie de connexion (710) est connectée à une première extrémité du cylindre, une première extrémité de la tige filetée est connectée de manière mobile à un second côté du cylindre, et le moteur entraîne une seconde extrémité de la tige filetée ; la partie de connexion (710) et la partie de mâchoire (711) de la fixation sont entraînées par le cylindre pour s'étendre ou se rétracter de manière mobile, de sorte que la fixation est connectée de manière mobile à ou retirée du bouchon (60).

5. Dispositif de mesure de précision selon la revendication 4, **caractérisé en ce que** le bouchon (60) comprend une plaque (61) connectée à une première surface du bouchon (60), et la plaque 61 a une ouverture (63) et deux parties de prise (65) formées sur deux côtés de l'ouverture (63) respectivement ; dans lequel les deux parties de prise (65) sont arquées et s'étendent autour de deux côtés de l'ouverture (63) respectivement, et un espace de verrouillage (67) est défini entre les deux parties de prise (65).

6. Dispositif de mesure de précision selon la revendication 1 ou 2, **caractérisé en ce que** l'échelle de pesage (32) est une balance électronique ou une échelle électronique.

7. Dispositif de mesure de précision selon la revendication 1 ou 2, **caractérisé en ce que** le bouchon (60) présente une première fente (62) définie sur un premier côté de celui-ci, une seconde fente (64) définie sur un second côté du bouchon (60) opposé au premier côté du bouchon (60), et une troisième fente (66) formée sur une seconde surface du bouchon (60), dans lequel la première fente (62) est connectée à une première feuille de raclage (621), la seconde fente (64) est couplée à une seconde feuille de raclage (641), et la troisième fente (66) est couplée à une troisième feuille de raclage (661).

8. Dispositif de mesure de précision selon la revendication 1 ou 2, **caractérisé en ce qu'**un haut de la sortie (110) est couplé à une quatrième feuille de raclage (113) .

9. Dispositif de mesure de précision selon la revendication 1 ou 2, **caractérisé en ce que** le bouchon (60) présente un orifice conique (68) défini sur la seconde surface de celui-ci, dans lequel l'orifice conique (68) a une première extrémité ouverte (681) définie sur un premier côté de celui-ci, et l'orifice conique (68) a une seconde extrémité ouverte (683) définie sur un second côté de celui-ci, dans lequel une largeur de l'orifice conique (68) diminue de la première extrémité ouverte (681) à la seconde extrémité ouverte (683).

10. Dispositif de mesure de précision selon la revendication 1 ou 2, **caractérisé en ce que** l'unité de tuyau d'alimentation (11) a un contrepoids (111) et un tuyau (13), la sortie (110) est formée sur un côté du contrepoids (111), et le tuyau (13) a un orifice de réception (131) défini sur un premier côté de celui-ci et une ouverture (133) définie sur un second côté du tuyau (13), dans lequel l'orifice de réception (131) est configuré pour communiquer avec l'unité de stockage de matériau (10), le contrepoids (111) est disposé sur un fond d'un intérieur du tuyau (13), et la sortie (110) est connectée à l'ouverture (133).

11. Dispositif de mesure de précision selon la revendication 10, **caractérisé en ce que** le dispositif d'alimentation en matériau (50) comprend un dispositif de vibration (507) connecté à un fond de l'unité de tuyau d'alimentation (11).
